(19) **Europäisches Patentamt / European Patent Office / Office européen des brevets**

(11) **EP 1 874 669 B1**

(12) **EUROPEAN PATENT SPECIFICATION**

(45) Date of publication and mention
of the grant of the patent:
**10.12.2008 Bulletin 2008/50**

(51) Int Cl.:
*B66B 1/24* [(2006.01)]   *B66B 1/28* [(2006.01)]
*B66B 1/30* [(2006.01)]   *H02P 21/00* [(2006.01)]
*H02P 6/16* [(2006.01)]

(21) Application number: **05715844.6**

(22) Date of filing: **08.03.2005**

(86) International application number:
**PCT/EP2005/002448**

(87) International publication number:
**WO 2006/094524 (14.09.2006 Gazette 2006/37)**

(54) **CONTROL SYSTEM FOR CONTROLLING THE SPEED OF A PASSENGER CONVEYOR**

STEUERSYSTEM ZUR STEUERUNG DER GESCHWINDIGKEIT EINES
PERSONENBEFÖRDERERS

SYSTÈME DE COMMANDE POUR GÉRER LA VITESSE D'UN CONVOYEUR DE PASSAGER

(84) Designated Contracting States:
**AT BE BG CH CY CZ DE DK EE ES FI FR GB GR
HU IE IS IT LI LT LU MC NL PL PT RO SE SI SK TR**

(43) Date of publication of application:
**09.01.2008 Bulletin 2008/02**

(73) Proprietor: **Otis Elevator Company
Farmington, CT 06032-2568 (US)**

(72) Inventors:
• **MANN, Michael
12347 Berlin (DE)**
• **CLEMENS, Robin
4487 Dortmund (DE)**

(74) Representative: **Klunker . Schmitt-Nilson . Hirsch
Winzererstrasse 106
80797 München (DE)**

(56) References cited:
**US-A- 6 051 943**

• **PATENT ABSTRACTS OF JAPAN vol. 1998, no.
01, 30 January 1998 (1998-01-30) -& JP 09 233898
A (HITACHI LTD; HITACHI BUILDING SYST CO
LTD), 5 September 1997 (1997-09-05)**
• **PATENT ABSTRACTS OF JAPAN vol. 2003, no.
08, 6 August 2003 (2003-08-06) -& JP 2003 095555
A (TOSHIBA ELEVATOR CO LTD), 3 April 2003
(2003-04-03)**

EP 1 874 669 B1

**Description**

Background of the invention

The invention refers to a system for controlling the speed of a passenger conveyor comprising a passenger carrying means driven by an electric motor. The electric motor can be a synchronous motor, in particular a permanent magnet synchronous motor (PMSM). The passenger conveyor may be an elevator, an escalator or a moving walk.

The conventional approach to control a motor of a passenger conveyor is to use a speed sensor in the form of a resolver, a digital speed encoder or an analog sine/cosine speed encoder. The sensor is required to detect the rotor speed and to detect the angle position of the rotor of the electric motor. These types of sensors, if having a satisfyingly high resolution, are expensive and it is desired to make available less expensive solutions. Document JP09233898 describes an elevator motor drive system with an accurate and therefore expensive incremental encoder.

Summary of the invention

The invention solves that problem by providing a new speed control approach using a rotor position observer which allows reducing the speed encoder resolution of the encoder used for encoding the rotor speed of the electric motor from conventionally some 1000 pulses to much less than 100 pulses decreasing the accuracy of the control.

The new speed control approach according to claim 1 discloses:

> a control system for controlling the speed of a passenger conveyor, the passenger conveyor including a passenger carrying means and an electric motor for driving the passenger carrying means, wherein the electric motor has a rotor and is controlled by the control system, the control system including:
>
>> a frequency inverter receiving at least one inverter control signal and supplying motor voltages to the electric motor;
>> a rotor sensor detecting predetermined rotor angle positions and supplying rotor angle position signals related to predetermined rotor angle positions;
>> a rotor position observer receiving the rotor angle position signals, generating estimated rotor angle values on the basis of the received rotor angle position signals, the estimated rotor angle values occurring with a rate which is higher than the rate of occurrence of the received rotor angel position signals, and generating an estimated rotor speed value in response to the estimated rotor angle values;
>> a speed profile generator supplying a reference angular speed value and a reference angular acceleration value;
>> an adaptive speed controller receiving the reference angular speed value and the reference angular acceleration value as set values and the estimated rotor speed value and the estimated rotor angle values as actual values and supplying reference motor current values on the basis of which the at least one inverter control signal is produced.

The rotor position observer is able to observe the rotor angle position signals received from the rotor sensor and to produce from the observed rotor angle position signals estimated rotor angle values which occur between the predetermined rotor angle positions detected by the rotor sensor. By such estimation, the rotor position observer can supply rotor angle position values with a higher rate of occurrence and with much shorter time distances than those of the rotor angle position signals delivered by the rotor sensor. Thus it is possible to use a rotor sensor or encoder with a rather low resolution and to have available the estimated values for the rotor angles with a rather high resolution, resulting in a correspondingly accurate motor control. This allows use of a non-expensive rotor sensor or encoder which results in a substantial reduction of the cost of the control system without loss of accuracy of the motor control.

If one provided the adaptive speed controller not with the estimated values from the rotor position observer but with the rotor angle positions obtained from the low-resolution sensor, the discrete moments of control would be too infrequent, and the control result of the control system would be inaccurate.

In an embodiment of the invention, the control system included decoder comprising a memory storing a look-up table correlating the rotor angle position signals with the respectively associated rotor sensor output signals.

In an embodiment of the invention, the rotor position observer comprises an extrapolation means designed to extrapolate an estimated course of rotor position angles from each of the rotor angle position signals deduced from the rotor sensor signals, and a sampling means sampling the extrapolated courses at a sampling rate which is higher than the rate of occurrence of the received rotor angle position signals, the samples of the extrapolated course of the rotor angle position signals being supplied to the adoptive speed controller as the actual rotor angle values.

In an embodiment of the invention, the extrapolation means is designed to perform a quadratic extrapolation.

In an embodiment of the invention, the rotor position observer comprises an angle restricting means restricting the estimated course of the rotor angle positions to be within an angle range between a pair of adjacent predetermined rotor angle positions.

In an embodiment of the invention, the rotor position observer comprises a filter smoothening discontinuities in the course of the estimated rotor angle positions obtained by extrapolation.

In an embodiment of the invention, the adaptive speed controller delivers current values whereas the input of the frequency inverter requires voltage values as inverter control signals. Therefore, a motor current controller is coupled between the adaptive speed controller and the frequency inverter and a subtraction circuit is coupled between the adaptive speed controller and the motor current controller. The adaptive speed controller supplies reference motor current values to a first input of the subtraction circuit. The subtraction circuit receives measured motor current values at a second input thereof. The subtraction circuit delivers to the motor current controller current values which are a difference between the reference motor current values and the measured motor current values. The motor current controller supplies inverter control signals in the form of voltage values.

In an embodiment of the invention, the control system controls an n-phase electric motor which is a 3-phase electric synchronous motor in a practical embodiment.

In an embodiment of the invention, the control system comprises two Park coordinates transformers. Each Park coordinates transformer comprises a first input, a second input and an output. The first Park coordinates transformer transforms 3-phase components into Park coordinates components and the second Park coordinates transformer transforms Park coordinates components into 3-phase components. The first input of each of the two Park coordinates transformers receives the estimated rotor angle values from the rotor position observer. The second input of the first Park coordinates transformer receives measured 3-phase motor current values. The second input of the second Park coordinates transformer receives the inverter control signals in the Park coordinates system. The output of the first Park coordinates transformer supplies estimated motor current values in the Park coordinates system to the motor current controller. The output of the second Park coordinates transformer supplies 3-phase inverter control signals to the frequency inverter.

The purpose of the use of the Park coordinates transformation is a simplification of the controllers and a reduction of the cost of the controllers. Without use of the Park coordinates transformers, each of the controllers and the related circuitry would have to handle 3-phase AC signals, with a corresponding complexity of the controllers. With the Park coordinates transformation, the three AC signals of the 3-phase system are reduced to two DC signals. Thus less complex and less expensive controllers can be used.

The park coordinates transformation is described in the article "Two-Dimensional Working-Optimization of a Wound-Rotor-Synchronous Motor for EV Drive-Train" by F. Harel at al, publication of the third International Symposium On Advanced Motion Systems, ELECTROMOTION '99, July 8-9, 1999, Patras, Greece; and "A Novel Current Control Strategy for PWM Inverters using the Sliding Mode Techniques" by Alexis B. Rey et al. As regards particulars of the Park coordinates transformation, reference is made to the above-mentioned two articles.

In an embodiment of the invention, the adaptive speed controller comprises a model referencing control means supplying an estimate of necessary torque demand on the basis of machine parameters, of the reference angular speed value from the speed profile generator and of the estimated rotor angle values received from the rotor position observer. The adaptive speed controller further comprises a PI-controller means supplying a correction torque value on the basis of the reference angular speed value from the speed profile generator and of the estimated rotor speed value from the rotor position observer. The correction torque value is added to the estimate of necessary torque demand. A resulting final torque demand is interrelated with a machine torque constant of the passenger conveyor to produce a current demand forming the output signal of the adaptive speed controller.

The final torque demand value is generated by the model referencing control means in a great measure, whereas the correction torque value which is contributed by the PI-controller means can be small in comparison to the estimate of necessary torque demand. The machine parameters of the passenger conveyor are considered by the model referencing control means so that the PI-controller does not need to be burdened with the processing of machine parameters. Thus the work to be done by the PI-controller means is much less than in case the PI-controller means would have to do the entire work for generating the final torque demand value. As a consequence, the PI-controller means can be less expensive and controller errors caused by the PI-controller means have less effect than in case the PI-controller means would have to do the entire work of producing the final torque demand.

In an embodiment of the invention, the adaptive speed controller comprises a PI-controller means having a gain which is adaptive to the estimated rotor speed. The adaptive gain improves the stability of the control system.

Brief description of the drawings

In the following, the invention is explained by means of exemplary embodiments of the invention with reference to the enclosed drawings, wherein:

Fig. 1      is an overview of an embodiment of the invention in the form of a block diagram;

Fig. 2      shows a block diagram of a rotor sensor and decoder and of a rotor position observer, usable for the embodiment of the invention shown in Fig. 1;

Fig. 3      shows schematically a motor rotor and rotor sensors arranged in sensor positions adjacent to the rotor;

Fig. 4      shows a table containing states and transitions of sensor signals and angles related thereto;

Fig. 5      shows angle estimations by quadratic extrapolations between detected sensor signals;

Fig. 6      shows valid angle ranges restrictions for the extrapolations;

Fig. 7      shows restricted extrapolations;

Fig. 8      shows filtered restricted extrapolations;

Fig. 9      shows the generation of estimated angles obtained by sampling the filtered restricted extrapolations; and

Fig. 10     shows the structure of an embodiment of an adaptive speed controller suitable for the embodiment of the invention shown in Fig. 1.

Description of embodiments

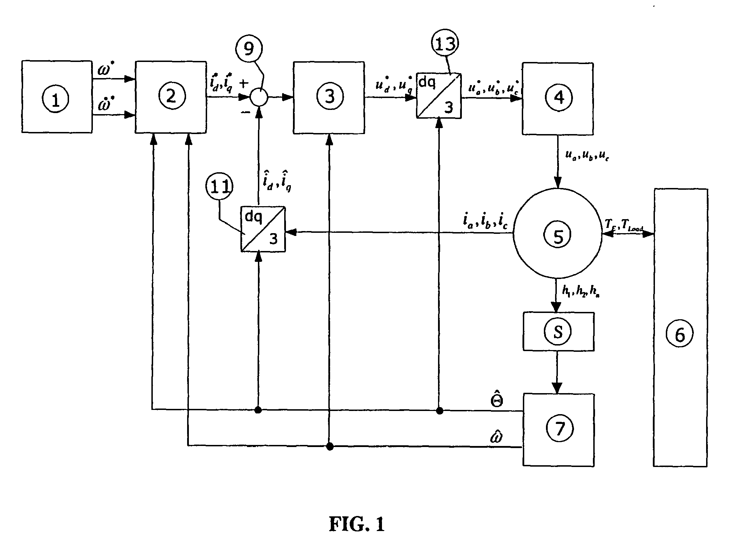

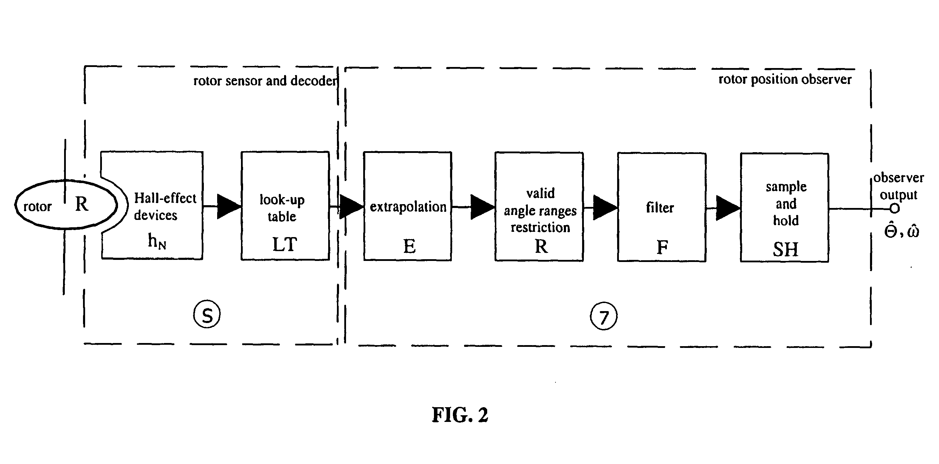

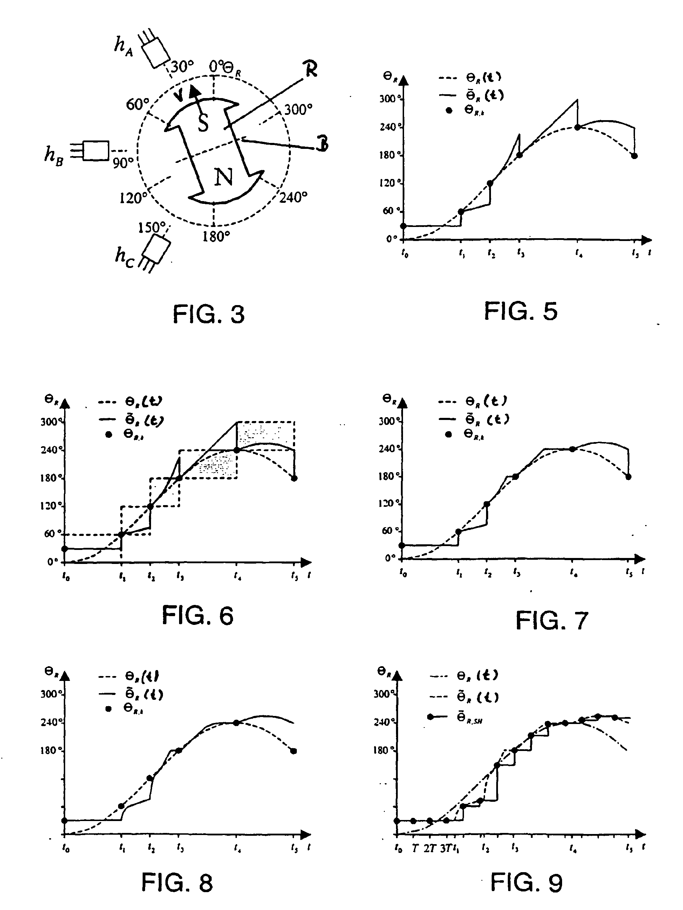

Figure 1 shows in the form of a block diagram an embodiment of the control system of the invention for controlling an elevator. The control system of Fig. 1 comprises a speed profile generator 1, an adaptive speed controller 2, a motor current controller 3, a frequency inverter 4, an electric AC motor 5 having a rotor R (Figs. 2 and 3), a rotor sensor and decoder S, elevator mechanics 6, a rotor position observer 7, a subtracting circuit 9, a first Park coordinates transformer (dq/3) 11, and a second Park coordinates transformer (dq/3) 13. All of these components are interconnected as shown in figure 1.

The Park coordinates transformers 11 and 13 are coordinates system transformers that transform 3-phase components into Park (d, q) components or vice versa. The first Park coordinates transformer 11 transforms 3-phase components into Park coordinates components whereas the second Park coordinates transformer 13 transforms Park coordinates components into 3-phase components. 3-phase components are AC components having permanently changing values. 3-phase components become DC components in the Park coordinates system so that the controllers have to process DC components only which is easier than controlling AC components.

The motor 5 is a 3-phase permanent magnet synchronous motor (PMSM) which moves the elevator mechanics 6. The elevator mechanics 6 include an elevator car to be hoisted along a hoistway. The motor 5 comprises a rotor R provided with permanent magnets. The motor 5 is driven by the frequency inverter 4 which supplies to the motor 5 3-phase voltages . The rotor angle positions of the rotor R are detected by a rotor sensor S. In a practical embodiment of the invention, the rotor sensor S comprises a plurality of Hall effect sensors $h_A$, $h_B$, $h_C$ (Fig. 3) that are located on one flexible printed circuit board fixed in the motor 5 in a position or positions in which the Hall effect sensors $h_A$ $h_B$, $h_C$ can detect the magnetic field of the permanent magnets of the rotor R when the permanent magnets pass the respective Hall effect sensor. An example of such a rotor sensor is known from DE 197 37 702 A1 the disclosure of which is incorporated herewith by way of reference. However, the invention is not restricted to that type of rotor sensor. Other types of physical realizations, e.g. low-resolution low-cost encoders, are suitable as well as long as they are able to detect the rotor angle positions.

The Hall effect sensors $h_A$, $h_B$, $h_C$ (Fig. 3) supply Hall effect sensor signals $h_1$, $h_2$, ..., $h_n$ ($h_1$ - $h_3$ in an embodiment having three Hall effect sensors) which occur at times when one of the permanent magnets passes one of the Hall effect sensors. The number of Hall effect sensor signals $h_1$, $h_2$, ..., $h_n$ obtained at a particular motor speed during a particular time interval depends on the number of permanent magnets of the rotor and the number of Hall effect sensors. About 3-5 Hall effect sensors are used in practical embodiments using a 3-phase electric motor 5. Thus the encoding resolution is limited to relatively low values. The low-resolution Hall effect sensor signals $h_1$, $h_2$, ... , $h_n$ are supplied to the rotor position observer 7. The rotor position observer 7 "transforms" the low-resolution Hall effect sensor signals $h_1$, $h_2$, ..., $h_n$ into a high-resolution signal by observing the occurrences of the sensor signals $h_1$, $h_2$, ..., $h_n$ and by producing interim values and, on the basis thereof, by calculating estimated rotor angle values $\hat{\ominus}$ and estimated rotor speed values $\hat{\omega}$. These estimated values are like output signals of a high-resolution rotor sensor. As the speed of an electric motor driving an escalator does not abruptly change, the estimated values can be used like values output by a high-resolution rotor sensor.

The speed profile generator 1 supplies a reference angular speed value w*, and a reference angular acceleration value $\dot{\omega}$* to the adaptive speed controller 2. The adaptive speed controller 2 receives the reference angular speed value w* and the reference angular acceleration value $\dot{\omega}$* from the speed profile generator 1 as set values and receives the estimated rotor angle values $\hat{\ominus}$ and the estimated rotor speed values $\hat{\omega}$ from the rotor position observer 7 as actual values. The adaptive speed controller 2 provides at its output estimated reference motor current signals $\ddot{i_d}$, $\ddot{i_q}$ presented as Park coordinates components. The subtracting circuit 9 has two inputs and receives the estimated reference

motor current signals $\hat{i}_d, \hat{i}_q$ as estimated set values at a first input and estimated motor current values $\hat{i}_d, \hat{i}_q$ as estimated motor current values (estimated actual values) at a second input. The subtracting circuit 9 subtracts the estimated motor

current values $\hat{i}_d, \hat{i}_q$ from the estimated reference motor current signals $i_d^{\bullet}, i_q^{\bullet}$ and the result of the subtraction is supplied to the motor current controller 3. The motor current controller 3 is provided since the output of the adaptive speed controller 2 delivers currents whereas the input of the frequency inverter 4 requires voltage. The motor current controller 3 converts current values into voltage values. The motor current controller 3 receives the result of said subtraction as set values and the estimated rotor speed values $\hat{\omega}$ from the rotor position observer 7 as actual values and outputs reference motor voltage signals $u_d^{\bullet}, u_q^{\bullet}$ in the form of Park coordinates components.

The reference motor voltage signals $u_d^{\bullet}, u_q^{\bullet}$ from the motor current controller 3 are supplied to the frequency inverter 4 after being transformed by the second Park coordinates transformer 13 from the Park coordinates components into 3-phase components $u_a^{\bullet}, u_b^{\bullet}, u_c^{\bullet}$.

The 3-phase components $u_a^{\bullet}, u_b^{\bullet}, u_c^{\bullet}$ are supplied to the frequency and control the inverter 4 to supply 3-phase motor voltages $u_a, u_b, u_c$ to the motor 5.

Each of the Park coordinates transformers 11 and 13 has a first input where it receives the value to be transformed, a second input where it receives a signal related to the angle speed of the AC signal, and an output where it delivers the transformed values.

The first Park coordinates transformer 11 receives at its first input measured 3-phase motor current values $i_a$, $i_b, i_c$ and at its second input the estimated rotor angle values $\hat{\Theta}$, transforms the measured 3-phase motor current values $i_a, i_b, i_c$ into the Park coordinates system and outputs estimated motor current values $\hat{i}_d, \hat{i}_q$ to the subtraction circuit 9 so that the subtracting circuit 9 can receive Park coordinates values at both inputs.

The frequency inverter 4 requires at its input 3-phase signals, and for that reason, the reference motor voltage

signals $u_d^{\bullet}, u_q^{\bullet}$ supplied by the motor current controller 3 are transformed by the second Park coordinates transformer 13 into the 3-phase voltage reference signals $u_a^{\bullet}, u_b^{\bullet}, u_c^{\bullet}$ 4. For that purpose, the second Park coordinates transformer 13 receives at its first input the reference motor voltage values $u_d^{\bullet}, u_q^{\bullet}$ and at its second input the estimated

rotor angle values $\hat{\Theta}$, and supplies the 3-phase AC components $u_a^{\bullet}, u_b^{\bullet}, u_c^{\bullet}$ to the frequency inverter 4 which supplies to the motor 5 the corresponding 3-phase motor voltages $u_a, u_b, u_c$,

Regarding the basic function of a Park coordinates transformer, explained with reference to the Park coordinates transformer 11, as the sum of the three currents $i_a, i_b, i_c$ is zero, it is possible to represent these three currents $i_a, i_b, i_c$ by two current vectors being perpendicular to each other which, however, still are AC components. In the Park transformation, the two perpendicular current vectors are rotated with the frequency of the AC currents resulting in DC components,

. The rotation of the current vectors is based on the estimated rotor angle values $\hat{\Theta}$ which are correlated with the frequency of the motor currents $i_a, i_b, i_c$ and which are supplied to each of the two Park coordinates transformers 11 and 13.

An embodiment of the rotor sensor and decoder S and of the rotor position observer 7 is shown in more detail in the form of the block diagram of Fig. 2.

The rotor sensor comprises a number of Hall effect devices $h_n$ which provide a changing pattern of sensor signals during revolution of the rotor 5R. The actual pattern of sensor signals is a combination of sensor states and sensor transitions supplied to a look-up-table LT (Fig. 2) which is obtained through factory calibration and defines for each combination of sensor states and sensor transitions a particular angle area and a particular rotor position, respectively.

An embodiment comprising $n_H = 3$ Hall effect devices $h_A, h_B, h_C$ is schematically presented in Fig. 3. The three Hall effect devices $h_A, h_B, h_C$ are distributed evenly within an electrical angular sector of 120° of the 360° revolution angle of the rotor R of the motor 5. In the illustrated embodiment, the rotor R comprises a permanent magnet having a north pole section N and a south pole section S. As it is usual in the field of electric motors, the reference point is assumed to be the vector arrow V of the south pole S. Whenever a border B between the two pole sections N and S passes one of said Hall effect devices $h_A, h_B, h_C$, this Hall effect device experiences a state transition.

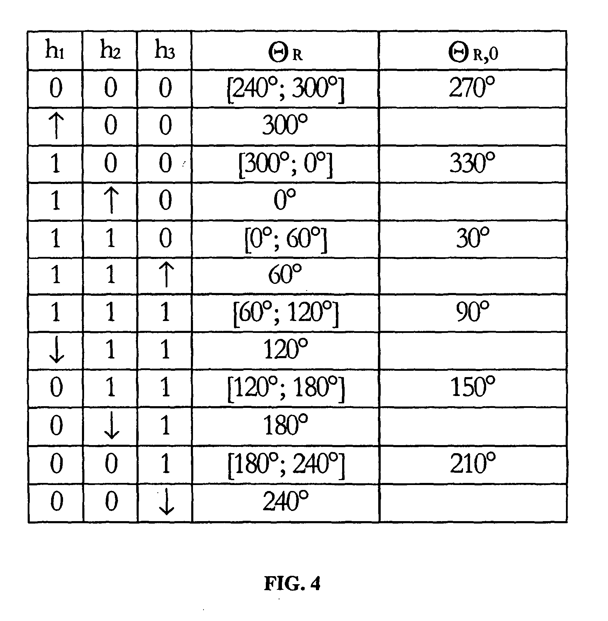

The table in Fig. 4 shows for the embodiment of Fig. 3 the possible combinations of sensor states ("0" or "1") and sensor transitions (↑or↓) as well as angle areas in squared brackets associated to the respective sensor states and discrete rotor angles at rotor positions resulting in sensor transitions. By definition, the rotor position $\ominus_R(t)$ is the angular position of vector of the south pole S of the rotor magnet's south pole S.

When at time $t_k$ a sensor switches its state ('k' being a counter for the state transitions events), the discrete rotor position $\ominus_{R,k} = \ominus_R (t = t_k)$ is looked up from the table of Fig. 4. This resembles a natural sampling of $\ominus_R(t)$. In the embodiment of Figures 3 and 4, there is a resolution of 60° angular steps.

As such a resolution is not satisfying, there are generated estimated rotor angle values $\overset{\wedge}{\ominus}$ by means of the rotor position observer 7 which performs processing steps which will be explained with reference to Figures 5-9 and which are denoted in Fig. 2 as extrapolation E, valid angle ranges restriction R, filter F and sample and hold SH. Said processing steps can be carried out by means of hardware components or by means of software control of a processor. At the observer output, estimated rotor angle values $\overset{\wedge}{\ominus}$ having an enhanced angular resolution and estimated rotor speed values $\overset{\wedge}{\omega}$ are available.

Referring to figures 2 and 5-9 the processing steps of the rotor position observer 7 are illuminated in more detail now.

From the current time and angle $(t_k, \ominus_{R,k})$ and the two previous values $(t_{k-1}, \ominus_{R,k-1})$ and $(t_{k-2}, \ominus_{R,k-2})$ the 1st derivative $\tilde{\omega}_{R,k}$ and 2nd derivative $\tilde{\omega}_{R,k}$ of the rotor angle are estimated through discrete differentiation:

$$\tilde{\omega}_{R,k} = \frac{\Theta_k - \Theta_{k-1}}{t_k - t_{k-1}} \qquad (1)$$

$$\dot{\tilde{\omega}}_{R,k} = \frac{\tilde{\omega}_{R,k} - \tilde{\omega}_{R,k-1}}{t_k - t_{k-1}} \qquad (2)$$

In Fig. 5 related to the processing step of extrapolation E, there are shown the continuous angular movement $\ominus_R(t)$ of the rotor R, the discrete rotor positions $(\ominus_{R,K})$ supplied by the look-up table LT and estimated rotor positions $\tilde{\ominus}_R(t)$ obtained by extrapolation.

In Fig. 5, $\Theta_{R,}(t)$ is approximated by $\tilde{\ominus}_R(t)$ through quadratic extrapolation using $\tilde{\omega}_{R,k}$ and $\tilde{\omega}_{R,k}$:

$$\tilde{\Theta}_R(t) = \Theta_{R,k} + \tilde{\omega}_{R,k} \cdot (t - t_k) + \frac{\dot{\tilde{\omega}}_{R,k}}{2} \cdot (t - t_k)^2 \qquad (3)$$

At each transition event $(t=t_k)$, $\tilde{\ominus}_R(t)$ is reset to $\ominus_{R,K} \times \ominus_R(t)$ as shown as an example for any arbitrary course of $\ominus_R(t)$. As previous samples are not available at startup, the derivatives are then chosen as as $\tilde{\omega}_{R,0} = 0$ and $\tilde{\omega}_{R,1} = 0$, ,thus giving

$$\tilde{\Theta}_R(t) = \begin{cases} \Theta_{R,0} \; \forall t \in [t_0 ; t_1] \\ \Theta_{R,1} + \tilde{\omega}_{R,1} \cdot (t - t_1) \forall t \in [t_1 ; t_2] \end{cases} \qquad (4)$$

for the startup, where $\ominus_{R,0}$ is deliberately chosen to be the center of the angular range denoted by the sensor states. The $\ominus_{R,0}$ for each state pattern are shown in the fifth column of the table of Fig. 4.

Referring to the valid angle ranges restriction in the processing step R in Fig. 2, as long as no switching of sensor states occurs, the table of Fig. 4 provides an angular range $\Delta_k (\ominus_R)$ of width $\frac{\pi}{n_H}$ to which the estimated angle $\tilde{\ominus}_R(t)$ is restricted (Fig. 6) $\tilde{\ominus}_R(t)$. is cut off if exceeding the bounds of $\Delta_k(\ominus_R)$, thus ensuring

$$\tilde{\Theta}_R(t) \in \Delta_k(\Theta_R) \qquad (5)$$

Fig. 6 shows the restriction bounds and Fig. 7 shows the accordingly restricted curve $\widetilde{\ominus}_R(t)$.

The current values $i_d, i_q$ in their Park-Blondel coordinate frame (Park coordinates transformers 11 and 13) strongly depend on $\widetilde{\ominus}_R(t)$. Thus, if $\widetilde{\ominus}_R(t)$ changes abruptly at $t_k$, so would $i_d$, $i_q$. This discontinuity might cause stability problems for current control and should be prevented by use of a filter (F in Fig. 2).

Fig. 8 shows the curve of $\widetilde{\ominus}_R(t)$ after applying a first-oder speed-adaptive filter with transfer function

$$F_\ominus(s) = \cfrac{1}{1 + \cfrac{s}{10 \cdot n_H \cdot |\bar{\omega}_R|}} \qquad (6)$$

Referring now to Figure 9, the filtered estimated angle $\widetilde{\ominus}_R(t)$ is sampled and held by means of a sample and hold circuit SH at each time step T, 2T, 3T, ... resulting in estimated angle samples $\ominus_{R,SH}$. The output is not any more restricted to the $2n_H$ discrete angles provided by the number and positions of the sensors $h_2$, $h_2$, $h_3$ according to the table of Fig. 4 at each transition event at time $t_k$. Instead, the observer 7 can produce values for $\widetilde{\ominus}_R(t)$ at arbitrary times.

In an embodiment of the invention, the controller 2 and the observer 7 are implemented on the same microcontroller, so that the synchronization of controller 2 and observer 7 is guaranteed.

The immediate evaluation of new angular information due to a sensor transition can be achieved within a triggered interrupt service routine of the microcontroller.

The motor 5 delivers a torque $T_E$ which is to be made equal to the torque $T_{load}$ which the elevator mechanics 6 requires to be driven with the desired speed profile and in accordance with the load to be transported by the elevator.

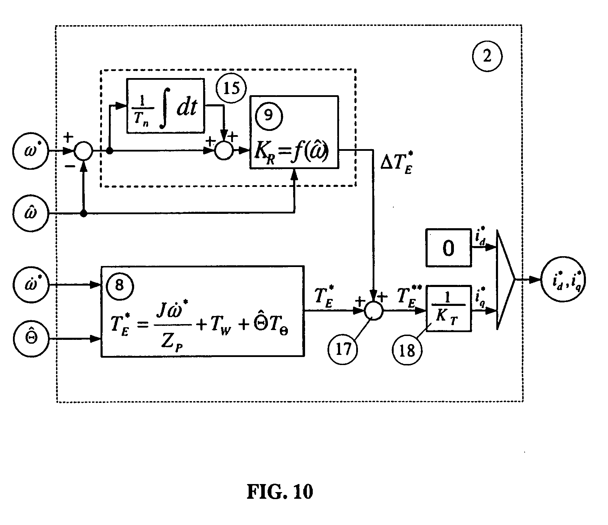

Figure 10 shows an embodiment of an adaptive speed controller 2 which provides reference motor current values $\overset{\bullet}{i_d^*}$, $\overset{\bullet}{i_q^*}$ which cause 3-phase motor voltages $u_a, u_b, u_c$ at the output of the frequency inverter 4 which, in turn, result in a motor torque $T_E$ equal to the load torque $T_{Load}$ 35 required by the elevator mechanics 6.

The adaptive speed controller 2 is a two-tiered controller comprising a model referencing control means 8 as a first stage and a PI-controller means 15 as a second stage operating parallely to the model referencing control means 8.

The model referencing control means 8 has two inputs where it receives the reference angular acceleration value $\dot{\omega}^*$ and the estimated rotor angle value $\widetilde{\ominus}$, respectively, and provides at its output and estimate of necessary torque demand $\overset{\bullet}{T_E^*}$ according to an algorithm indicated in block 8 of figure 2.

The PI-controller means 15 has two inputs where it receives the reference angle speed value $\omega^*$ and the estimated rotor speed value $\hat{\omega}$, respectively, and supplies at its output a correction torque value $\Delta T_E^{\bullet}$ according to an algorithm indicated in the dashed block 15 of figure 2. The correction torque value $\Delta T_E^{\bullet}$ is greater than zero during acceleration or load variation of the elevator. The value of the estimate of necessary torque demand $T_E^*$ and the correction torque value $\Delta T_E^{\bullet}$ are added by means of a summing circuit 17 which provides at its output a final torque command $T_E^{\bullet\bullet}$. The final torque command $T_E^{\bullet\bullet}$ is linked with a machine torque constant $K_T$, as shown at 18 in Fig. 10, resulting in a quadratur current command $\overset{\bullet}{i_q^*}$. The output signal of the adaptive speed controller 2 of figure 2 is a current command vector $\overset{\bullet}{i_d^*}$, $\overset{\bullet}{i_q^*}$ which is delivered to the subtraction circuit 9.

In case of use of a permanent magnet synchronous motor 5, $\overset{\bullet}{i_d^*}$ is zero as there is no external current excitation causing a magnetic flux. The component $\overset{\bullet}{i_d^*}$ of the current command vector $\overset{\bullet}{i_d^*}$, $\overset{\bullet}{i_q^*}$ is to be considered in the adaptive speed controller 2 even if $\overset{\bullet}{i_d^*}$ is zero as both components $\overset{\bullet}{i_d^*}$ and $\overset{\bullet}{i_q^*}$ are required for the Park coordinates transformation.

The model referencing control means 8 of the adaptive speed controller 2 in figure 2 produces an estimate of necessary torque demand $T_E^*$ in consideration of machine parameters such as the inertia J of the motor 5, the number of poles $Z_p$ of the motor 5, a speed dependent parameter $T_W$ (e.g. friction), and a parameter $T_Q$ which is dependent on the particular position of the elevator car. The inertia parameter J is correlated with the reference angular acceleration

$\dot\omega^*$ and the car position dependent parameter $T_Q$ is correlated with the estimated rotor angle value $\hat\ominus$.

The PI-controller 15 comprises an integrating unit 16 and a gain unit 9. The gain $K_R$ of the gain unit 9 is adaptive to the rotational speed estimate as indicated in block 9 of the PI-controller means 15. At low speeds, considerable time passes between sensor state transitions. From speed controller point of view, this means a speed dependent dead time

$$t_d = t - t_k \approx \frac{\pi}{n_{Hall}\hat\omega}$$ in the speed feedback. Such a delay might diminish the systems stability through lowering its phase reserve. As a rule, in control theory (Nyquist's theorem), the control gain has to be lowered as phase reserve goes down. Therefore, as $\hat\omega$ goes down, $K_R$ is lowered. For $\hat\omega > \dfrac{10\pi}{n_{Hall}}$, delay effects may be ignored and the adoption may be switched off.

The model referencing control means 8 of the adaptive speed controller of figure 2 calculates a prediction of the torque demand $T_E^*$ on the basis of known machine parameters, whereas the PI-controller means 15 is not burdened with processing of machine parameters. Moreover, the correction torque value $\Delta T_E^{\bullet}$ to be generated by the PI-controller means 15 needs to be small only so that the PI-controller means 15 can be quick and/or can be of a low-cost design.

In an embodiment of the invention, the adaptive speed controller 2 and the rotor position observer 7 are implemented by means of a microcontroller having particular areas one of which is programmed by software to behave as the speed controller 2 and another one of which is programmed by software to behave as the rotor position observer 7. The present invention provides a low-cost control system as the provision of the rotor position observer 7 allows the use of a low-resolution and therefore low-cost rotor speed encoder.

**Claims**

1. A control system for controlling the speed of a passenger conveyor, the passenger conveyor including a passenger carrying means and an electric motor (5) for driving the passenger carrying means, wherein the electric motor (5) has a rotor (R) and is controlled by the control system, the control system including:

   a frequency inverter (4) receiving at least one inverter control signal $(u_a^{\bullet}, u_b^{\bullet}, u_c^{\bullet})$ and supplying motor voltages ($u_a$, $u_b$, $u_c$) to the electric motor (5);

   a rotor position sensor ($h_A$, $h_B$, $h_C$) detecting predetermined rotor angle positions and supplying rotor angle position signals ($\ominus_{R,K}$) related to said predetermined rotor angle positions;

   a rotor position observer (7) receiving the rotor angle position signals ($\ominus_{R,K}$) and comprising estimated rotor angle generating means designed for generating estimated rotor angle values ($\hat\ominus$) on the basis of the received rotor angle position signals ($\ominus_{R,K}$), the estimated rotor angle values ($\hat\ominus$) occurring with a rate which is higher than the rate of occurrence of the received rotor angle position signals ($\ominus_{R,K}$), and generating an estimated rotor speed value ($\hat\omega$) in response to the estimated rotor angle values ($\hat\ominus$);

   a speed profile generator (1) supplying a reference angular speed value ($w^*$) and a reference angular acceleration value ($\dot\omega^*$);

   an adaptive speed controller (2) receiving the reference angular speed value $w^*$ and the reference angular acceleration value ($\dot\omega^*$) as set values and the estimated rotor speed value ($\hat\omega$) and the estimated rotor angle values ($\hat\ominus$) as actual values and supplying estimated reference motor current values on the basis of which the at least one inverter control signal $(u_a^{\bullet}, u_b^{\bullet}, u_c^{\bullet})$ is produced.

2. The control system of claim 1, comprising a decoder decoding rotor sensor output signals ($h_1$, $h_2$, $h_3$) into rotor angle position signals ($\ominus_{R,K}$).

3. The control system of claim 2, wherein the decoder comprises a memory storing a look-up table (LT) correlating the rotor angle position signals ($\ominus_{R,K}$) with the respectively associated rotor sensor output signals ($h_1$, $h_2$, $h_3$).

4. The control system of any of claims 1-3, wherein the rotor position observer (7) comprises:

   an extrapolation means (E) designed to extrapolate an estimated course of rotor position angles

$$\tilde{\Theta}_R(t) = \Theta_{R,k} + \tilde{\omega}_{R,k} \cdot (t - t_k) + \frac{\dot{\tilde{\omega}}_{R,k}}{2} \cdot (t - t_k)^2$$ from each of the rotor angle position signals ($\Theta_{R,K}$) deduced from the rotor sensor signals; and

a sampling means (SH) sampling the extrapolated course of rotor position angles $\tilde{\Theta}_R(t)$ at a sampling rate which is higher than the rate of occurrence of the received rotor angle position signals ($\Theta_{R,K}$), the samples ($\Theta_{R,SH}$) of the extrapolated course $\tilde{\Theta}_R(t)$ of the rotor angle position signals being supplied to the adaptive speed controller (2) as the actual rotor angle values ($\hat{\Theta}$).

5. The control system of claim 4, wherein the extrapolation means (E) is designed to perform a quadratic extrapolation.

6. The control system of claim 5, wherein the extrapolation means (E)is designed to generate from the actual values of time (t) and rotor angle ($\Theta_{R,K}$) and from the two previous values of time($t_{k-1}$) and rotor angle ($\Theta_{R,k-1}$) the 1st derivative ($t_{k-1},\Theta_{R,k-1}$) and 2nd derivative ($t_{k-2},\Theta_{R,k-2}$) of the rotor angle through discrete differentiation:

$$\tilde{\omega}_{R,k} = \frac{\Theta_k - \Theta_{k-1}}{t_k - t_{k-1}}$$

$$\dot{\tilde{\omega}}_{R,k} = \frac{\tilde{\omega}_{R,k} - \tilde{\omega}_{R,k-1}}{t_k - t_{k-1}}$$

and to generate an estimated course $\tilde{\Theta}_R(t)$ of the rotor angle positions through quadratic extrapolation as follows:

$$\tilde{\Theta}_R(t) = \Theta_{R,k} + \tilde{\omega}_{R,k} \cdot (t - t_k) + \frac{\dot{\tilde{\omega}}_{R,k}}{2} \cdot (t - t_k)^2$$

7. The control system of any of claims 4-6, wherein the rotor position observer (7) comprises an angle restricting means (R) restricting the estimated course $\tilde{\Theta}_R(t)$ of the rotor angle positions to be within an angle range $\Delta_k(\Theta_R)$ between a pair of adjacent predetermined rotor angle positions.

8. The control system of any of claims 4-7, wherein the the rotor position observer (7) comprises a filter (F) designated to smoothen discontinuities in the course $\tilde{\Theta}_R(t)$ of the estimated rotor angle positions obtained by extrapolation.

9. The control system of claim 8, wherein the filter (F) is a first-order speed adaptive filter.

10. The control system of claim 9, wherein the filter (F) has the following transfer function:

$$F_\Theta(s) = \frac{1}{1 + \frac{s}{10 \cdot n_H \cdot |\tilde{\omega}_R|}}$$

11. The control system of any of claims 1-10, wherein a motor current controller (3) is coupled between the adaptive speed controller (2) and the frequency inverter (4) and a subtraction circuit (9) is coupled between the adaptive speed controller (2) and the motor current controller (3), the adaptive speed controller (2) supplying reference motor current values ($i_d^*$, $i_q^*$) to a first input (+) of the subtraction circuit (9), the subtraction circuit (9) receiving measured

motor current values

$$(\widehat{\overline{i}}_d \, , \, \widehat{\overline{i}}_q)$$

at a second input (-) thereof, the subtraction circuit (9) delivering to the motor current controller (3) a difference between the reference motor current value $(\overset{\cdot\cdot}{i}_d, \, \overset{\cdot}{i}_q)$ and the measured motor current values

$$(\widehat{\overline{i}}_d \, , \, \widehat{\overline{i}}_q),$$

the motor current controller (3) supplying the inverter control signal $(\overset{\cdot}{u}_a \, , \overset{\cdot}{u}_b \, , \, \overset{\cdot}{u}_c).$

12. The control system of claim 11, for controlling an n-phase electric motor (5), the control system comprising a first Park coordinates transformer (11) and a second Park coordinates transformer (13), each Park coordinates transformer comprising a first input, a second input and an output, the first Park coordinates transformer (11) transforming n-phase components into Park coordinates components and the second Park coordinates transformer (13) transforming Park coordinates components into n-phase components, the first input of the first Park coordinates transformer (11) and the first input of the second Park coordinates transformer (13) each receiving the estimated rotor angle values ($\hat{\ominus}$) from the rotor position observer (7), the second input of the first Park coordinates transformer (11) receiving measured n-phase motor current values ($i_a$, $i_b$, $i_c$) and the second input of the second Park coordinates transformer (13) receiving inverter control signals ($u_d$*, $u_q$*) in the Park coordinates system, the output of the first Park coordinates transformer (11) supplying estimated motor current values

$$(\widehat{\overline{i}}_d \, , \, \widehat{\overline{i}}_q)$$

in the Park coordinates system to the motor current controller (3), and the output of the second Park coordinates transformer (13) supplying n-phase inverter control signals $(\overset{\cdot}{u}_a \, , \, \overset{\cdot}{u}_b \, , \, \overset{\cdot}{u}_c)$ to the frequency inverter (4).

13. The control system of claim 12, wherein the adaptive speed controller (2) comprises:

a model referencing control means (8) supplying an estimate of necessary torque demand ($T_E$*) on the basis of machine parameters, of the reference angular speed value ($\omega$*) from the speed profile generator (1) and of the estimated rotor angle values ($\hat{\ominus}$) received from the rotor position observer (7);
and a PI-controller means (15) supplying a correction torque value ($\Delta T_E$*) on the basis of the reference angular speed value ($\omega$*) from the speed profile generator (1) and the estimated rotor speed value ($\hat{\omega}$) from the rotor position observer (7), the correction torque value ($\Delta T_E$*) being added to the estimate of necessary torque demand ($T_E$*), a resulting final torque demand ($T_E$**) being interrelated with a machine torque constant ($K_T$) of the passenger conveyor to produce a current demand forming the output signal $(\overset{\cdot\cdot}{i}_d, \, \overset{\cdot}{i}_q)$ of the adaptive speed controller (2).

14. The control system of claim 12 or 13, wherein the adaptive speed controller (2) comprises a PI-controller means (15) having a gain which is adaptive to the estimated rotor speed value ($\hat{\omega}$) from the rotor position observer (7).

15. The control system of any of claims 1-14 designed for controlling a 3-phase synchronous motor (5).

16. The control system of any of claims 1-15 designed for controlling a permanent magnet synchronous motor (5).

17. The control system of any of claims 1-16 designed for controlling an elevator.

18. The control system of any of claims 1-16 designed for controlling an escalator.

**19.** The control system of any of claims 1-16 designed for controlling a moving walk.

**Patentansprüche**

**1.** Steuersystem zum Steuern der Geschwindigkeit einer Personenbeförderungsvorrichtung, wobei die Personenbeförderungsvorrichtung eine Personentrageeinrichtung und einen elektrischen Motor (5) zum Antreiben der Personentrageeinrichtung enthält, wobei der elektrische Motor (5) einen Rotor (R) hat und von dem Steuersystem gesteuert ist, wobei das Steuersystem enthält:

einen Frequenzinverter (4), der mindestens ein Invertersteuersignal ($u_a^*$, $u_b^*$, $u_c^*$) erhält und dem elektrischen Motor (5) Motorspannungen ($u_a$, $u_b$, $u_c$) zuführt;

einen Rotorpositionssensor ($h_A$, $h_B$, $h_C$), der vorbestimmte Rotorwinkelpositionen detektiert und mit den vorbestimmten Rotorwinkelpositionen in Beziehung stehende Rotorwinkelpositionssignale ($\ominus_{R,K}$) bereitstellt;

eine Rotorpositionsbeobachtungseinrichtung (7), die die Rotorwinkelpositionssignale ($\ominus_{R,K}$) aufnimmt und eine Erzeugungseinrichtung für geschätzte Rotorwinkel aufweist, die zum Erzeugen von geschätzten Rotorwinkelwerten ($\hat{\ominus}$) auf der Basis der aufgenommenen Rotorwinkelpositionssignale ($\ominus_{R,K}$) ausgelegt ist, wobei die geschätzten Rotorwinkelwerte ($\hat{\ominus}$) mit einer höheren Rate als der Auftrittsrate der aufgenommenen Rotorwinkelpositionssignale ($\ominus_{R,K}$) auftreten, und die einen geschätzten Rotorgeschwindigkeitswert ($\hat{\omega}$) als Reaktion auf die geschätzten Rotorwinkelwerte ($\hat{\ominus}$) erzeugt;

einen Geschwindigkeitsprofilgenerator (1), der einen Referenzwinkelgeschwindigkeitswert w* und einen Referenzwinkelbeschleunigungswert ($\dot{\omega}$*) bereitstellt;

einen adaptiven Geschwindigkeits-Controller (2), der den Referenzwinkelgeschwindigkeitswert (w*) und den Referenzwinkelbeschleunigungswert ($\omega$*) als gesetzte Werte und den geschätzten Rotorgeschwindigkeitswert ($\hat{\omega}$) und die geschätzten Rotorwinkelwerte ($\hat{\ominus}$) als tatsächliche Werte aufnimmt und geschätzte Referenzmotorstromwerte ($\tilde{i}_d^*$, $\tilde{i}_q^*$) bereitstellt, auf

deren Basis das mindestens eine Invertersteuersignal ($u_a^*$, $u_b^*$, $u_c^*$) erzeugt ist.

**2.** Steuersystem nach Anspruch 1, aufweisend einen Decoder, der Rotorsensorausgabesignale ($h_1$, $h_2$, $h_3$) in Rotorwinkelpositionssignale ($\ominus_{R,K}$) decodiert.

**3.** Steuersystem nach Anspruch 2, wobei der Decoder einen Speicher aufweist, der eine Nachschlagetabelle (LT) speichert, die die Rotorwinkelpositionsignale ($\ominus_{R,K}$) mit den jeweils zugehörigen Rotorsensorausgabesignalen ($h_1$, $h_2$, $h_3$) in Beziehung setzt.

**4.** Steuersystem nach irgendeinem der Ansprüche 1 bis 3, wobei die Rotorpositionsüberwachungseinrichtung (7) aufweist:

eine Extrapolationseinrichtung (E), die ausgelegt ist, einen geschätzten Verlauf von Rotorpositionswinkeln

$$\tilde{\Theta}_R(t) = \Theta_{R,k} + \tilde{\omega}_{R,k} \cdot (t - t_k) + \frac{\dot{\tilde{\omega}}_{R,k}}{2} \cdot (t - t_k)^2 \quad \text{aus jedem der aus den Rotorsensorsignalen herge-}$$

leiteten Rotorwinkelpositionssignalen ($\ominus_{R,K}$) zu extrapolieren; und

eine Abtasteinrichtung (SH), die den extrapolierten Verlauf von Rotorpositionswinkeln $\tilde{\ominus}_R(t)$ mit einer Abtastrate abtastet, die höher als die Auftrittsrate der aufgenommenen Rotorwinkelpositionssignale ($\ominus_{R,K}$) ist, wobei die Abtastwerte ($\ominus_{R,SH}$) des extrapolierten Verlaufs $\tilde{\ominus}_R(t)$ der Rotorwinkelpositionssignale dem adaptiven Geschwindigkeits-Controller (2) als die tatsächlichen Rotorwinkelwerte ($\hat{\ominus}$) zugeführt werden.

**5.** Steuersystem nach Anspruch 4, wobei die Extrapolationseinrichtung (E) ausgelegt ist, eine quadratische Extrapolation auszuführen.

**6.** Steuersystem nach Anspruch 5, wobei die Extrapolationseinrichtung (E) ausgelegt ist, aus den tatsächlichen Werten von Zeit (t) und Rotorwinkel ($\ominus_{R,K}$) und aus den zwei vorherigen Werten von Zeit ($t_{k-1}$) und Rotorwinkel ($\ominus_{R,k-1}$) die erste Ableitung ($t_{k-1}$, $\ominus_{R,k-1}$) und die zweite Ableitung ($t_{k-2}$, $\ominus_{R,k-2}$) des Rotorwinkels durch diskrete Differenziation

zu erzeugen:

$$\widetilde{\omega}_{R,k} = \frac{\Theta_k - \Theta_{k-1}}{t_k - t_{k-1}}$$

$$\dot{\widetilde{\omega}}_{R,k} = \frac{\widetilde{\omega}_{R,k} - \widetilde{\omega}_{R,k-1}}{t_k - t_{k-1}}$$

und einen geschätzten Verlauf $\widetilde{\Theta}_R(t)$ der Rotorwinkelpositionen durch quadratische Extrapolation folgendermaßen zu erzeugen:

$$\widetilde{\Theta}_R(t) = \Theta_{R,k} + \widetilde{\omega}_{R,k} \cdot (t - t_k) + \frac{\dot{\widetilde{\omega}}_{R,k}}{2} \cdot (t - t_k)^2$$

**7.** Steuersystem nach irgendeinem der Ansprüche 4 bis 6, wobei die Rotorpositionsüberwachungseinrichtung (7) eine Winkelbegrenzungseinrichtung (R) aufweist, die den geschätzten Verlauf $\widetilde{\Theta}_R(t)$ der Rotorwinkelpositionen begrenzt, so dass er innerhalb eines Winkelbereichs $\Delta_k (\Theta_R)$ zwischen einem Paar von benachbarten vorbestimmten Rotorwinkelpositionen ist.

**8.** Steuersystem nach irgendeinem der Ansprüche 4 bis 7, wobei die Rotorpositionsüberwachungseinrichtung (7) einen Filter (F) aufweist, der dazu bestimmt ist, Diskontinuitäten in dem Verlauf $\widetilde{\Theta}_R(t)$ der durch Extrapolation erhaltenen, geschätzten Rotorwinkelpositionen zu glätten.

**9.** Steuersystem nach Anspruch 8, wobei der Filter (F) ein adaptiver Filter mit Geschwindigkeit erster Ordnung ist.

**10.** Steuersystem nach Anspruch 9, wobei der Filter (F) die folgende Transferfunktion hat:

$$F_\Theta(s) = \frac{1}{1 + \dfrac{s}{10 \cdot n_H \cdot |\widetilde{\omega}_R|}}$$

**11.** Steuersystem nach irgendeinem der Ansprüche 1 bis 10, wobei ein Motorstrom-Controller (3) zwischen dem adaptiven Geschwindigkeits-Controller (2) und dem Frequenzinverter (4) gekoppelt ist und eine Subtraktionsschaltung (9) zwischen dem adaptiven Geschwindigkeits-Controller (2) und dem Motorstrom-Controller (3) gekoppelt ist, wobei der adaptive Geschwindigkeits-Controller (2) einem ersten Eingang (+) der Subtraktionsschaltung (9) Referenzmotorstromwerte ($i_d^*$, $i_q^*$) zuführt, die Subtraktionsschaltung (9) gemessene Motorstromwerte

$$(\widehat{i}_d,\ \widehat{i}_q)$$

an ihrem zweiten Eingang (-) erhält, die Subtraktionsschaltung (9) dem Motorstrom-Controller (3) eine Differenz zwischen dem Referenzmotorstromwert ($i_d^*$, $i_q^*$) und den gemessenen Motorstromwerten

$$(\widehat{i_d}\,,\ \widehat{i_q})$$

liefert und der Motorstrom-Controller (3) das Invertersteuersignal $(u_a^{*}\,,\ u_b^{*}\,,\ u_c^{*})$ bereitstellt.

12. Steuersystem nach Anspruch 11 zum Steuern eines n-phasigen elektrischen Motors (5), wobei das Steuersystem eine erste Park-Koordinaten-Transformationseinrichtung (11) und eine zweite Park-Koordinaten-Transformationseinrichtung (13) aufweist, wobei jede Park-Koordinaten-Transformationseinrichtung einen ersten Eingang, einen zweiten Eingang und einen Ausgang aufweist, die erste Park-Koordinaten-Transformationseinrichtung (11) n-phasige Komponenten in Park-Koordinaten-Komponenten und die zweite Park-Koordinaten-Transformationseinrichtung (13) Park-Koordinaten-Komponenten in n-phasige Komponenten umwandelt, der erste Eingang der ersten Park-Koordinaten-Transformationseinrichtung (11) und der erste Eingang der zweiten Park-Koordinaten-Transformationseinrichtung (13) jeweils die geschätzten Rotorwinkelwerte ($\hat{\ominus}$) von der Rotorpositionsüberwachungseinrichtung (7) erhalten, der zweite Eingang der ersten Park-Koordinaten-Transformationseinrichtung (11) gemessene n-phasige Motorstromwerte ($i_a$, $i_b$, $i_c$) und der zweite Eingang der zweiten Park-Koordinaten-Transformationseinrichtung (13) Invertersteuersignale ($u_d^{*}$, $u_q^{*}$) in dem Park-Koordinaten-System erhalten, der Ausgang der ersten Park-Koordinaten-Transformationseinrichtung (11) dem Motorstrom-Controller (3) geschätzte Motorstromwerte

$$(\widehat{i_d}\,,\ \widehat{i_q})$$

in dem Park-Koordinaten-System zuführt und der Ausgang der zweiten Park-Koordinaten-Transformationseinrichtung (13) dem Frequenzinverter (4) n-phasige Invertersteuersignale $(u_a^{*}\,,\ u_b^{*}\,,\ u_c^{*})$ zuführt.

13. Steuersystem nach Anspruch 12, wobei der adaptive Geschwindigkeits-Controller (2) aufweist:

eine Modell referenzierende Steuereinrichtung (8), die eine Schätzung des notwendigen Drehmomentbedarfs ($T_E^{*}$) auf der Basis von Maschinenparametern, des Referenzwinkelgeschwindigkeitswerts ($\omega^{*}$) von dem Geschwindigkeitsprofilgenerator (1) und den von der Rotorpositionsüberwachungseinrichtung (7) erhaltenen geschätzten Rotorwinkelwerten ($\hat{\ominus}$) bereitstellt;
und eine PI-Controller-Einrichtung (15), die einen Korrekturdrehmomentwert ($\Delta T_E^{*}$) auf der Basis des Referenzwinkelgeschwindigkeitswerts ($\omega^{*}$) von dem Geschwindigkeitsprofilgenerator (1) und des geschätzten Rotorgeschwindigkeitswerts ($\hat{\omega}$) von der Rotorpositionsüberwachungseinrichtung (7) bereitstellt, wobei der Korrekturdrehmomentwert ($\Delta T_E^{*}$) zu der Schätzung des notwendigen Drehmomentbedarfs ($T_E^{*}$) addiert wird, wobei ein resultierender endgültiger Drehmomentbedarf ($T_E^{**}$) mit einer Maschinendrehmomentkonstante ($K_T$) der Personenbeförderungsvorrichtung in Zusammenhang gebracht wird, um eine Stromanforderung zu erstellen, die das Ausgabesignal $(\dot{i_d^{*}}\,,\ \dot{i_q^{*}})$ des adaptiven Geschwindigkeits-Controllers (2) bildet.

14. Steuersystem nach Anspruch 12 oder 13, wobei der adaptive Geschwindigkeits-Controller (2) eine PI-Controller-Einrichtung (15) aufweist, die eine Verstärkung hat, die adaptiv ist in Bezug auf den geschätzten Rotorgeschwindigkeitswert ($\hat{\omega}$) von der Rotorpositionsüberwachungseinrichtung (7).

15. Steuersystem nach irgendeinem der Ansprüche 1 bis 14, ausgelegt zum Steuern eines drei-phasigen Synchronmotors (5).

16. Steuersystem nach irgendeinem der Ansprüche 1 bis 15, ausgelegt zum Steuern eines permanentmagnetischen Synchronmotors (5).

17. Steuersystem nach irgendeinem der Ansprüche 1 bis 16, ausgelegt zum Steuern eines Aufzugs.

18. Steuersystem nach irgendeinem der Ansprüche 1 bis 16, ausgelegt zum Steuern einer Fahrtreppe.

19. Steuersystem nach irgendeinem der Ansprüche 1 bis 16, ausgelegt zum Steuern eines Fahrsteigs.

**Revendications**

1. Système de commande pour commander la vitesse d'un dispositif de transport de passagers, le dispositif de transport de passagers comprenant des moyens de transport de passagers et un moteur électrique (5) pour entraîner les moyens de transport de passagers, dans lequel le moteur électrique (5) comporte un rotor (R) et est commandé par le système de commande, le système de commande comprenant :

   un inverseur de fréquence (4) recevant au moins un signal de commande d'inverseur ($u_a{}^*$, $u_b{}^*$, $u_c{}^*$) et fournissant des tensions de moteur ($u_a$, $u_b$, $u_c$) au moteur électrique (5) ;
   un capteur de position de rotor ($h_A$, $h_B$, $h_C$) détectant des positions d'angle de rotor prédéterminées et fournissant des signaux de position d'angle de rotor ($\ominus_{R,K}$) liés auxdites positions d'angle de rotor prédéterminées ;
   un dispositif d'observation de position de rotor (7) recevant les signaux de position d'angle de rotor ($\ominus_{R,K}$) et comprenant des moyens de génération d'angle de rotor estimé conçus pour générer des valeurs d'angle de rotor estimées ($\hat{\Theta}$) sur la base des signaux de position d'angle de rotor reçus ($\ominus_{R,K}$), les valeurs d'angle de rotor estimées ($\hat{\Theta}$) apparaissant à une fréquence qui est supérieure à la fréquence d'occurrence des signaux de position d'angle de rotor reçus ($\ominus_{R,K}$), et générant une valeur de vitesse de rotor estimée ($\hat{\omega}$) en réponse aux valeurs d'angle de rotor estimées ($\Theta$) ;
   un générateur de profil de vitesse (1) fournissant une valeur de vitesse angulaire de référence ($w^*$) et une valeur d'accélération angulaire de référence ($\dot{\omega}^*$) ;
   un contrôleur de vitesse adaptative (2) recevant la valeur de vitesse angulaire de référence $w^*$ et la valeur d'accélération angulaire de référence ($\dot{\omega}^*$) comme des valeurs de consigne et la valeur de vitesse de rotor estimée ($\hat{\omega}$) et les valeurs d'angle de rotor estimées ($\hat{\Theta}$) comme des
   valeurs réelles et fournissant des valeurs de courant de moteur de référence estimées ($i_d{}^*$, $i_q{}^*$) sur la base desquelles ledit au moins un signal de commande d'inverseur ($u_a{}^*$, $u_b{}^*$, $u_c{}^*$) est produit.

2. Système de commande selon la revendication 1, comprenant un décodeur décodant des signaux de sortie de capteur de rotor ($h_1$, $h_2$, $h_3$) en signaux de position d'angle de rotor ($\ominus_{R,K}$).

3. Système de commande selon la revendication 2, dans lequel le décodeur comprend une mémoire stockant une table de conversion (LT) mettant en corrélation les signaux de position d'angle de rotor ($\ominus_{R,K}$) avec les signaux de sortie de capteur de rotor ($h_1$, $h_2$, $h_3$) respectivement associés.

4. Système de commande selon l'une quelconque des revendications 1 à 3, dans lequel le dispositif d'observation de position de rotor (7) comprend :

   des moyens d'extrapolation (E) conçus pour extrapoler un trajet estimé des angles de position de rotor

   $$\widetilde{\Theta}_R(t) = \Theta_{R,k} + \widetilde{\omega}_{R,k} \cdot (t - t_k) + \frac{\dot{\widetilde{\omega}}_{R,k}}{2} \cdot (t - t_k)^2$$ à partir de chacun des signaux de position d'angle de

   rotor ($\ominus_{R,K}$) déduits des signaux de capteur de rotor ; et
   des moyens d'échantillonnage (SH) échantillonnant le trajet extrapolé des angles de position de rotor $\widetilde{\ominus}_R$ (t) à une fréquence d'échantillonnage qui est supérieure à la fréquence d'occurrence des signaux de position d'angle de rotor reçus ($\ominus_{R,K}$), les échantillons ($\ominus_{R,SH}$) du trajet extrapolé $\widetilde{\ominus}_R$(t) des signaux de position d'angle de rotor étant fournis au contrôleur de vitesse adaptative (2) en tant que valeurs d'angle de rotor réelles ($\hat{\Theta}$).

5. Système de commande selon la revendication 4, dans lequel les moyens d'extrapolation (E) sont conçus pour effectuer une extrapolation quadratique.

6. Système de commande selon la revendication 5, dans lequel les moyens d'extrapolation (E) sont conçus pour générer à partir des valeurs de temps réelles (t) et de l'angle de rotor ($\ominus_{R,K}$) et à partir des deux valeurs précédentes du temps ($t_{k-1}$) et de l'angle de rotor ($\ominus_{R,K-1}$) la première dérivée ($t_{k-1}$, $\ominus_{R,k-1}$) et la deuxième dérivée ($t_{k-2}$, $\ominus_{R,k-2}$) de l'angle de rotor par une différentiation discrète :

$$\tilde{\omega}_{R,k} = \frac{\Theta_k - \Theta_{k-1}}{t_k - t_{k-1}}$$

$$\dot{\tilde{\omega}}_{R,k} = \frac{\tilde{\omega}_{R,k} - \tilde{\omega}_{R,k-1}}{t_k - t_{k-1}}$$

et générer un trajet estimé $\tilde{\ominus}_R(t)$ des positions d'angle de rotor par une extrapolation quadratique, comme suit :

$$\tilde{\Theta}_R(t) \doteq \Theta_{R,k} + \tilde{\omega}_{R,k} \cdot (t - t_k) + \frac{\dot{\tilde{\omega}}_{R,k}}{2} \cdot (t - t_k)^2$$

7.  Système de commande selon l'une quelconque des revendications 4 à 6, dans lequel le dispositif d'observation de position de rotor (7) comprend des moyens de restriction d'angle (R) limitant le trajet estimé $\tilde{\ominus}_R(t)$ des positions d'angle de rotor pour qu'il se trouve dans une plage d'angle $\Delta_k(\ominus_R)$ entre une paire de positions d'angle de rotor prédéterminées adjacentes.

8.  Système de commande selon l'une quelconque des revendications 4 à 7, dans lequel le dispositif d'observation de position de rotor (7) comprend un filtre (F) conçu pour lisser des discontinuités dans le trajet $\tilde{\ominus}_R(t)$ des positions d'angle de rotor obtenues par extrapolation.

9.  Système de commande selon la revendication 8, dans lequel le filtre (F) est un filtre adaptable à la vitesse du premier ordre.

10. Système de commande selon la revendication 9, dans lequel le filtre (F) présente la fonction de transfert suivante :

$$F_\Theta(s) = \frac{1}{1 + \frac{s}{10 \cdot n_H \cdot |\tilde{\omega}_R|}}$$

11. Système de commande selon l'une quelconque des revendications 1 à 10, dans lequel un contrôleur de courant de moteur (3) est couplé entre le contrôleur de vitesse adaptative (2) et l'inverseur de fréquence (4), et un circuit de soustraction (9) est couplé entre le contrôleur de vitesse adaptative (2) et le contrôleur de courant de moteur (3), le contrôleur de vitesse adaptative (2) fournissant des valeurs de courant de moteur de référence ($i_d^*$, $i_q^*$) à une première entrée (+) du circuit de soustraction (9), le circuit de soustraction (9) recevant des valeurs de courant de moteur mesurées ($\hat{i}_d, \hat{i}_q$) à une deuxième entrée (-) de celuici, le circuit de soustraction (9) fournissant au contrôleur de courant de moteur (3) une différence entre la valeur de courant de moteur de référence ($i_d^*$, $i_q^*$) et les valeurs de courant de moteur mesurées ($\hat{i}_d, \hat{i}_q$), le contrôleur de courant de moteur (3) fournissant le signal de commande d'inverseur ($u_a^*$, $u_b^*$, $u_c^*$).

12. Système de commande selon la revendication 11, pour commander un moteur électrique à n phases (5), le système de commande comprenant un premier transformateur de coordonnées de Park (11) et un deuxième transformateur de coordonnées de Park (13), chaque transformateur de coordonnées de Park comprenant une première entrée, une deuxième entrée et une sortie, le premier transformateur de coordonnées de Park (11) transformant des composantes de n phases en composantes de coordonnées Park et le deuxième transformateur de coordonnées Park (13) transformant des composantes de coordonnées Park en composantes de n phases, la première entrée du premier transformateur de coordonnées de Park (11) et la première entrée du deuxième transformateur de coordonnées de Park (13) recevant chacune les valeurs d'angle de rotor estimées ($\hat{\ominus}$) du dispositif d'observation de position de rotor (7), la deuxième entrée du premier transformateur de coordonnées de Park (11) recevant des valeurs de courant de moteur à n phases mesurées ($i_a$, $i_b$, $i_c$) et la deuxième entrée du deuxième transformateur de coordonnées de Park (13) recevant des signaux de commande d'inverseur ($u_d$*, $u_q$*) dans le système de coordonnées de Park, la sortie du premier transformateur de coordonnées de Park (11) fournissant des valeurs de courant de moteur estimées ($\hat{i}_d$,$\hat{i}_q$) dans le système de coordonnées de Park au contrôleur de courant de moteur (3), et la sortie du deuxième transformateur de coordonnées de Park (13) fournissant des signaux de commande d'inverseur à n phases ($u_a$*, $u_b$*, $u_c$*) à l'inverseur de fréquence (4).

13. Système de commande selon la revendication 12, dans lequel le contrôleur de vitesse adaptative (2) comprend :

des moyens de commande de référence de modèle (8) fournissant une estimation d'une demande de couple nécessaire ($T_E$*) sur la base de paramètres machine, de la valeur de vitesse angulaire de référence ($\omega$*) du générateur de profil de vitesse (1) et des valeurs d'angle de rotor estimées ($\hat{\Theta}$) reçues du dispositif d'observation de position de rotor (7) ; et
des moyens de contrôleur PI (15) fournissant une valeur de couple de correction ($\Delta T_E$*) sur la base de la valeur de vitesse angulaire de référence ($\omega$*) du générateur de profil de vitesse (1) et de la valeur de vitesse de rotor estimée ($\hat{\omega}$) du dispositif d'observation de position de rotor (7), la valeur de couple de correction ($\Delta T_E$*) étant ajoutée à l'estimation de la demande de couple nécessaire ($T_E$*), une demande de couple finale résultante ($T_E$**) étant en corrélation avec une constante de couple machine ($K_T$) du dispositif de transport de passagers afin de produire une demande de courant formant le signal de sortie ($i_d$*, $i_q$*) du contrôleur de vitesse adaptative (2).

14. Système de commande selon la revendication 12 ou 13, dans lequel le contrôleur de vitesse adaptative (2) comprend des moyens de contrôleur PI (15) ayant un gain qui est adaptatif selon la valeur de vitesse de rotor estimée ($\hat{\omega}$) du dispositif d'observation de position de rotor (7).

15. Système de commande selon l'une quelconque des revendications 1 à 14, conçu pour commander un moteur synchrone triphasé (5).

16. Système de commande selon l'une quelconque des revendications 1 à 15, conçu pour commander un moteur synchrone à aimants permanents (5).

17. Système de commande selon l'une quelconque des revendications 1 à 16, conçu pour commander un ascenseur.

18. Système de commande selon l'une quelconque des revendications 1 à 16, conçu pour commander un escalier mécanique.

19. Système de commande selon l'une quelconque des revendications 1 à 16, conçu pour commander un trottoir roulant.

FIG. 1

**FIG. 2**

FIG. 3

FIG. 5

FIG. 6

FIG. 7

FIG. 8

FIG. 9

| $h_1$ | $h_2$ | $h_3$ | $\Theta_R$ | $\Theta_{R,0}$ |
|---|---|---|---|---|
| 0 | 0 | 0 | [240°; 300°] | 270° |
| ↑ | 0 | 0 | 300° | |
| 1 | 0 | 0 | [300°; 0°] | 330° |
| 1 | ↑ | 0 | 0° | |
| 1 | 1 | 0 | [0°; 60°] | 30° |
| 1 | 1 | ↑ | 60° | |
| 1 | 1 | 1 | [60°; 120°] | 90° |
| ↓ | 1 | 1 | 120° | |
| 0 | 1 | 1 | [120°; 180°] | 150° |
| 0 | ↓ | 1 | 180° | |
| 0 | 0 | 1 | [180°; 240°] | 210° |
| 0 | 0 | ↓ | 240° | |

**FIG. 4**

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 09233898 B

- DE 19737702 A1

**Non-patent literature cited in the description**

- **F. HAREL.** Two-Dimensional Working-Optimization of a Wound-Rotor-Synchronous Motor for EV Drive-Train. *publication of the third International Symposium On Advanced Motion Systems, ELEC-TROMOTION,* 08 July 1999, vol. 99